# EUROPEAN PATENT APPLICATION

(11) **EP 4 234 863 A1**
(43) Date of publication of application: **30.08.2023**
(21) Application number: 22158179.6
(22) Date of filing: 23.02.2022
(51) Int. Cl.: E05C 9/02, E05C 9/18, E05B 65/02, E05B 9/08, H02B 1/38

(54) **PRE-MOUNTED LOCK FOR A DOOR OF A LOW VOLTAGE ENCLOSURE**

(71) Applicant: ABB S.p.A., 20124 Milano (IT)
(72) Inventor: Nava, Giuseppe, I-22037 Ponte Lambro (CO) (IT); Arienti, Marco, I-20841 Carate Brianza (MB) (IT); Maggi, Cristiano, I-23862 Civate (LC) (IT)
(74) Representative: De Bortoli, Eros

(57) **Abstract**

The present invention relates to a pre-mounted lock assembly (1) for a door (2) of a low and medium voltage electrical cabinet. According to the invention, the pre-mounted lock assembly (1) comprises a containment profile (10) that develops along a main direction (101) defining a seat (15). A mechanism (20) is arranged in said seat (15). More precisely, said mechanism (20) comprises at least a rod (21, 22,23) and at least one guide element (41, 42, 43) for said rod (21, 22, 23). Said guide element (41, 42, 43) is rigidly connected to said profile (10). The pre-mounted lock assembly (1) also comprises fixing means (31) for fixing it to said door (2) following the connection of said at least one guide element (41, 42, 43) to said profile (10), wherein said fixing means (31) are arranged on said profile (10) and/or on said at least one guide element (41, 42, 43).

## Description

The present invention relates to the manufacturing of low and medium voltage electrical enclosure; in particular the present invention relates to a pre-mounted lock assembly for a door of a low and medium voltage electrical enclosure. The present invention also relates to a door comprising such pre-mounted lock assembly and an enclosure comprising such a door. Generally, an enclosure for low and medium voltage electrical distribution is a well-known equipment formed by a supporting structure delimited by lateral, rear, top and bottom walls and closed by a door, which houses in one or more internal compartments electrical apparatuses and equipment, such as, e.g., circuit breakers and/or similar devices, a bus-bar system, electrical instruments, and similar devices.

The enclosure also comprises a lock assembly for closing and opening the door. Such a lock assembly comprises a mechanism that can be switched between a first configuration and a second configuration by means of an activation lever. In the first configuration, a first engagement element of the mechanism interacts with a second engagement element of the supporting structure so as to keep the door in a closing position. When the mechanism is switched in the second configuration, the two engagement elements are mutually released and the door can be opened.

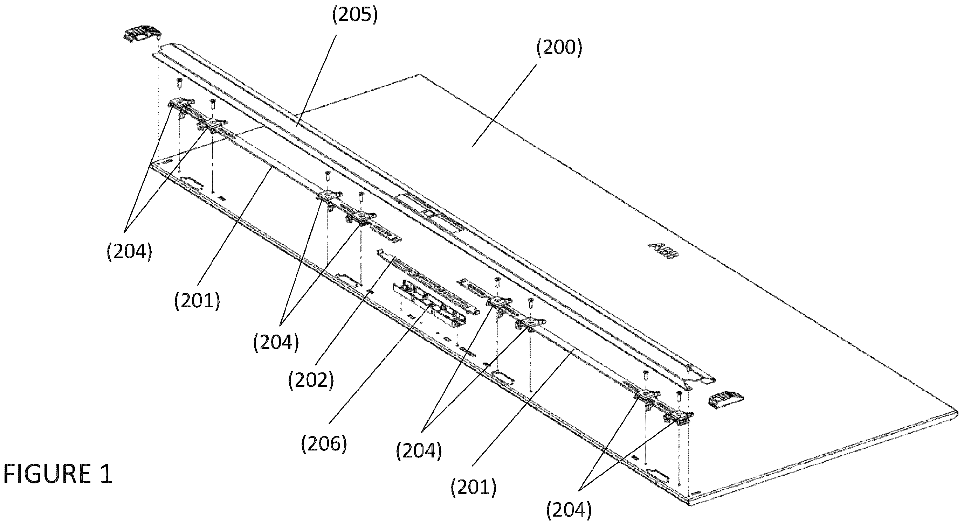

Figure 1 shows an embodiment of a lock assembly of a cabinet door according to the prior art. In particular, Figure 1 shows the components of the lock mechanism that is activated by a lever (not shown). The mechanism is installed on a side of the door (200) and comprises two longer rods (201) guided by corresponding guide elements (204). The mechanism also comprises a shorter rod (202) guided by a central guide element (206). The shorter rod is placed between the two lover rods (201) and connected therewith so as a movement imposed to the shorter rod, by means of the activation lever, is transmitted to the longer rods. On this regard, depending on the activation principle of the mechanism, the longer rods are moved in the same direction or in an opposite direction by the movement of the activation lever. Typically, at their free end, the longer rods are configured so as to engage a fixed element connected to the supporting structure when the mechanism is switched in the closing configuration.

It has been noted that the lock assembly installation operations are particularly complex. First, each guide element of the mechanism above is screwed to the door with the corresponding rods so as to form the mechanism structure. Then, a cover profile (205) is installed above the mechanism so as to protect it. More precisely, the cover profile is screwed to the door in order to fix stably it. A safety stopper is provided at each end of the profile in order to close longitudinally the profile. Overall, these operations are time consuming and consequently they impact in term of manufacturing costs.

Further, it has to be noted that, in view of the steps required, the lock assembly must be necessarily installed along the production line of the cabinet door. At the end of such a production line, the presence of the lock assembly increases the thickness of the door at one of its sides. That limits the transport possibilities thereof.

In view of the above consideration, there is clearly the need to provide a new technical solution that allows to overcome the above disadvantages.

The present disclosure is aimed at providing a technical solution that allows to overcome the above drawbacks. In particular the present invention is aimed at providing a lock assembly which make easier and faster its installation to a door side. Within this aim, a purpose of the present invention is to provide a lock assembly that can be installed to the door also outside the production line thereof. Another purpose of the present invention is to provide a lock assembly that does not impact on the transport of the door, but rather it makes such a transport easier. Not the last purpose of the present invention is to provide a lock assembly that is reliable and easy to manufacture at competitive costs.

The aim and the purposes above are reached by means of a pre-mounted lock assembly for a door of a low and medium voltage electrical cabinet, wherein said lock assembly comprises a:
- a containment profile that develops along a main direction defining a seat;
- a mechanism housed in said seat, wherein said mechanism comprises at least a rod and at least one guide element for said rod, wherein said at least one guide element is rigidly connected to said profile, and
- fixing means for fixing said lock assembly to said door following the connection of said at least one guide element to said profile, wherein said fixing means are installed on said profile and/or on said at least one guide element.

According to a possible embodiment, the said at least one guide element is connected to said profile by means of first snap-fit means.

According to possible embodiment, said fixing means comprise second snap-fit means.

According to a possible embodiment, said containment profile comprises a curved portion and two flat portions that develop on a same plane from opposite regions of said curved portion, said flat portions being separated so that an opening is defined therebetween for the insertion of said mechanism in said seat.

Preferably, said opening comprises at least one enlargement for the insertion of one or more guide elements of said at least one rod.

According to a possible embodiment, said mechanism comprises a first rod, a second rod and a third rod that connects the first rod to the second rod; the first rod and the second rod comprise a through slot defined close to an end proximal to said third rod, said through slot being configured so as to be engaged by a bent end of said third rod.

Preferably, said mechanism comprises a plurality of guide elements for each of the rods.

According to a possible embodiment, at least one of said guide element comprises a body defining a longitudinal cavity through which a corresponding rod can be inserted, said body comprising first surfaces that make it and said rod mutually slidable after their placement in said seat of the profile; said body comprising second surfaces that guide laterally said rod with respect to said body, and vice versa.

According to a possible embodiment, the body comprises an internal side and an external side mutually opposed, wherein connecting means for connecting said guide element to said profile are arranged on said external side of said body. Preferably, said connecting means comprise a couple of first snap-fit connectors each of which configured to engage with a corresponding slot defining through said profile.

According to a possible embodiment, the fixing means for fixing the lock assembly to the door are arranged on the external side of said body of said guide element, wherein said fixing means comprise second snap-fit connectors configured to engage in a corresponding slot defined through a door on which the pre-mounted lock assembly will be installed.

According to a further embodiment, the body of the guide element also comprises an alignment element protruding from its external side for contacting a fixed alignment element arranged on the supporting structure of said enclosure.

The present invention also relates to a door for a low voltage enclosure characterized in that it comprises a pre-mounted lock assembly according to one or more of the embodiments above. The invention also relates to a low voltage enclosure characterized in that it comprises such a door.

Further features and advantages of the present invention will be clearer from the description of preferred but not exclusive embodiments of a low and medium voltage electrical enclosure according to the invention, shown by way of examples in the accompanying drawings, wherein:
- Figure 1 is an exploded view of a door of an embodiment of a door of an according to a prior art solution;
- Figure 2 is a perspective exploded view of a pre-mounted lock assembly according to the invention;
- Figure 3 is a perspective view of the lock assembly of Figure 1;
- Figure 4 is an enlargement view of the detail D1 of Figure 2;
- Figure 4A and 4B are perspective views from different points of view of a first pair of components of the lock assembly of Figure 1;
- Figure 5 is an enlargement view of the detail D3 of Figure 3;
- Figure 6 is an enlargement view of the detail D2 of Figure 2;
- Figure 6A and 6B are perspective views from different points of view of a second pair of components of the lock assembly of Figure 1;
- Figure 7 is an enlargement view of the detail D4 of Figure 3;
- Figures 8 and 9 are views, from opposite point of views, relative to an installation step of the lock assembly of Figure 1 on a door;
- Figure 8A is an enlarged view of the detail D5 of Figure 8;
- Figure 10 shows a door on which the pre-mounted lock assembly of Figure 1 is installed;
- Figures 11A and 11B are views, from opposite point of views, of some components of the door;
- Figure 12 is a perspective view of a component of a lock assembly according to the invention;
- Figures 12A and 12B are views relating to the operation of a lock assembly according to the invention.

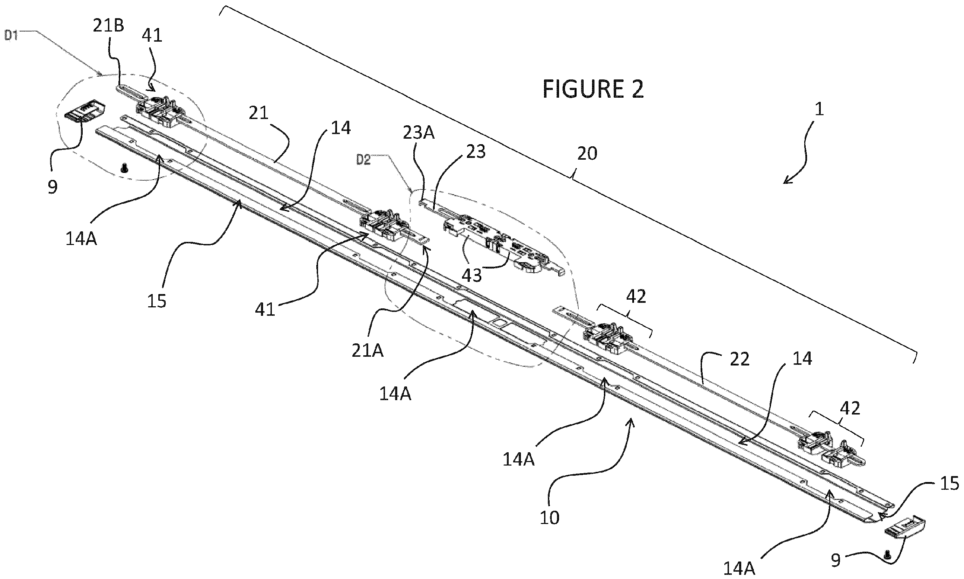

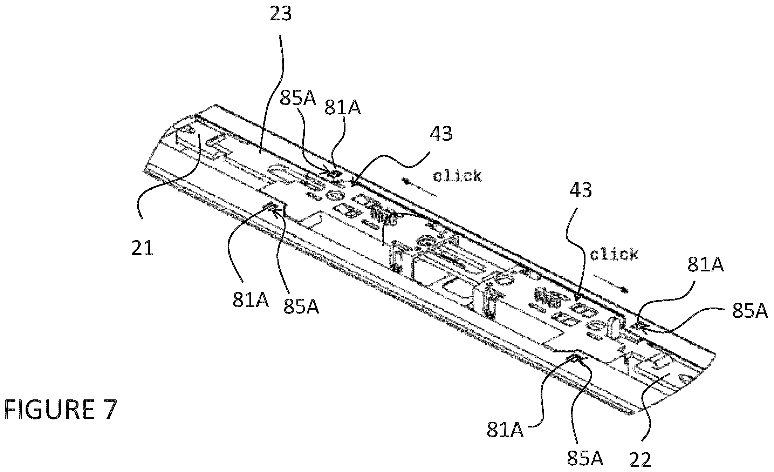

With reference to the attached figures 2-12B, the present invention relates to a pre-mounted lock assembly that is indicated with the reference number 1 in the attached figures. Hereinbelow the expression *"lock assembly 1"* or *"assembly 1"* are also used for indicating the pre-mounted lock assembly 1. The lock assembly 1 is intended to be installed on a door of a low-voltage enclosure (or cabinet) to open and close thereof.

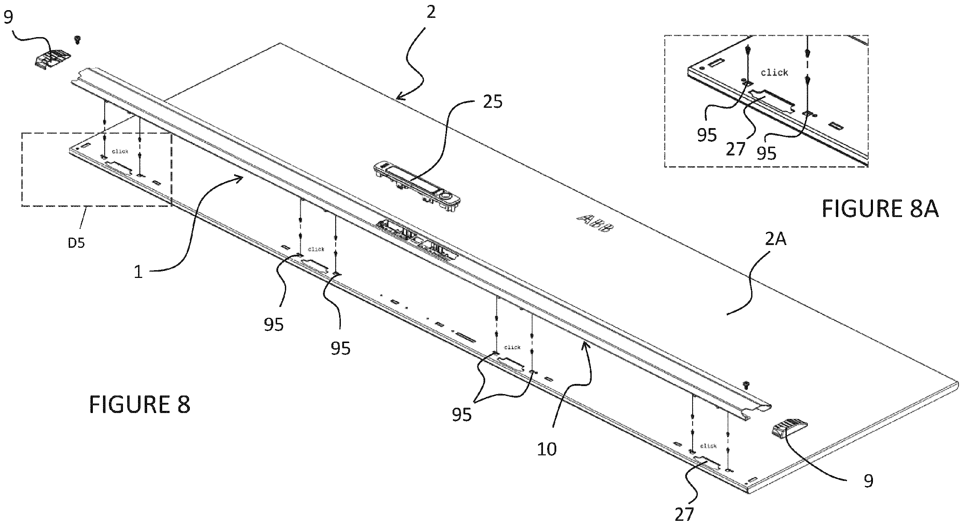

According to the invention, the pre-mounted lock assembly 1 comprises a containment profile 10 (or *profile 10*) that develops along a main direction 101 so as to define an internal seat 15 in which a mechanism 20 is accommodated. The mechanism 20 is activated by a lever 25 (shown in Figure 8) according to a principle know *per se.*

Figure 2 is an exploded view showing the components of the pre-mounted lock assembly 1 according to a possible, not exclusive, embodiment of the invention. The mechanism 20 comprises a plurality of rods 21, 22, 23 and a plurality of guide elements 41, 42, 43 for each of the rods 21, 22, 23. More precisely, in the embodiment shown in the figures, the mechanism 20 comprises a first rod 21, a second rod 22 and a connecting rod 23 (or central rod 23) for connecting the first rod 21 to the second rod 22 so that a movement of the connecting rod 23, in a direction, translates in a movement of the other rods 21, 22. Hereinbelow, the first rod 21 and the second rod 22 are indicated also with the expression *"external rods 21,22"* and the connecting rod 23 is indicated also with the expression *"central rod 23*".

As shown in the figures, preferably, each of the rods 21, 22, 23 is flat and it has a rectangular cross section considered on a reference plane orthogonal to the direction along which it develops, i.e., orthogonal to the main direction 101 when the mechanism 20 is placed in the seat 1 5 of the profile 10. However, the rods 21, 22, 23 could have a different configuration both in term of cross section shape and in term of general shape (i.e., the rods could be *"not flat"*)*.*

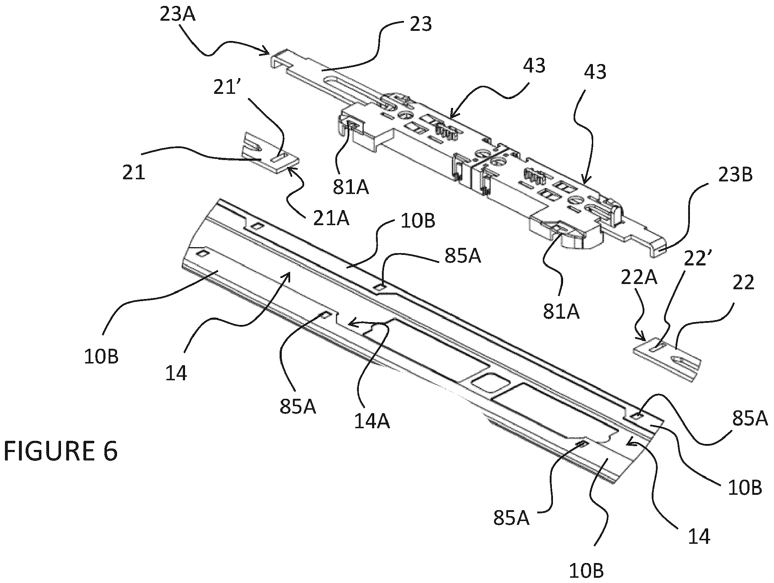

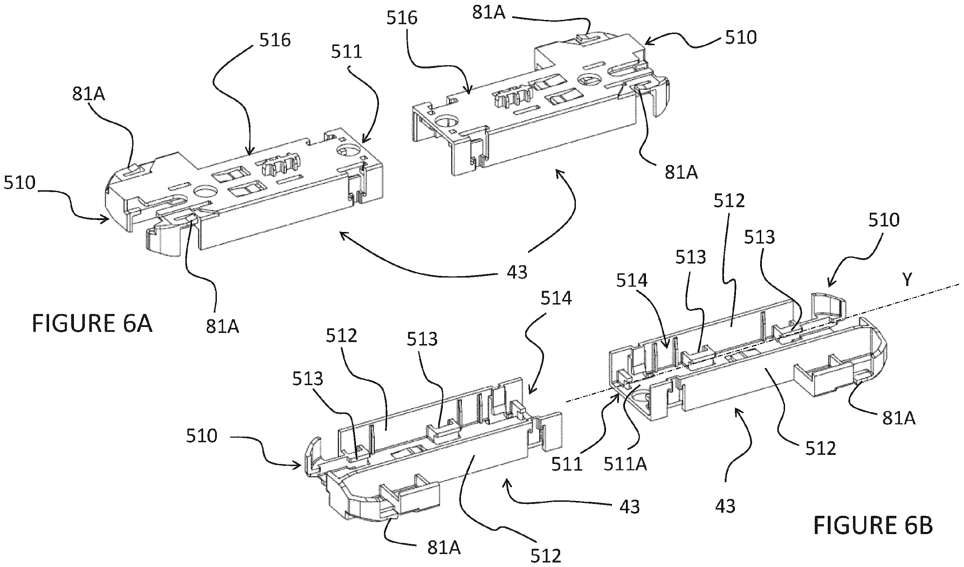

Preferably, each rod 21, 22, 23 comprises a through slot 21', 22' defined close to their end 21A-22A closest to the central rod 23. Such a second slot 21', 22' is configured so as to be engaged by a corresponding bent end 23A-23B of the of the central rod 23 (see Figure 6). When the bent ends 23A, 23B engage the second through slot 21', 22'of the external rods 21, 22 then the three flat rods 21, 22, 23 are connected and move together along the main direction 101.

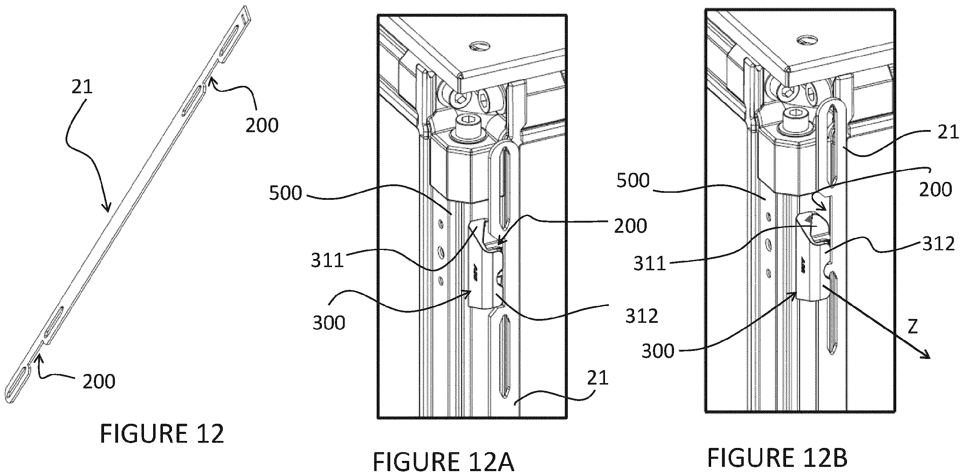

Figure 12 shows in detail the configuration of the first rod 21. The same configuration is also provided for the other external rod, namely the second rod 22. As shown, the first rod 21 comprises at least a lateral recess 200 which is involved in the locking of the door 2 to the supporting structure 500 of the cabinet, according to a working principle better explained below with reference to Figures 12A and 12B.

According to a preferred embodiment of the profile 10, comprises a curved portion 10A and two flat portions 10B that develop on the same plane from opposite parts of the curved portion 10A. Overall, these cited portions 10A, 10B define an open cross section having a substantially C-shape, wherein said cross section is considered on a plane orthogonal to the main direction 101 above defined. Such a cross section defines the shape of the seat 15 of the profile 10. The flat portions 10B are separated on their development plane so that a longitudinal opening 14 is defined therebetween for the insertion of the components of the mechanism 20 (i.e., the rods 21, 22, 23 and the guide elements 41, 42, 43) the internal seat 15 of the containment profile 10. On this regard, preferably, the distance between the two flat portions 10B is not constant along the main direction 101, but it is greater in some regions so as to define a plurality of enlargements 14A each of which suitable for the insertion of one or more guide elements 41, 42, 43 of the rods 21, 22, 23 according to a principle better explained below.

According to a preferred embodiment shown in the figures, each of the external rods 21, 22 is supported by two pairs of guide elements 41, 42. Instead, the central rod 23 is supported by a sole pair of guide elements 43. However, in alternative embodiments (not shown in the figures) one or more of the cited rods 21, 22, 23 could be supported and guided by a sole guide element or alternatively by more than two pairs of guide elements.

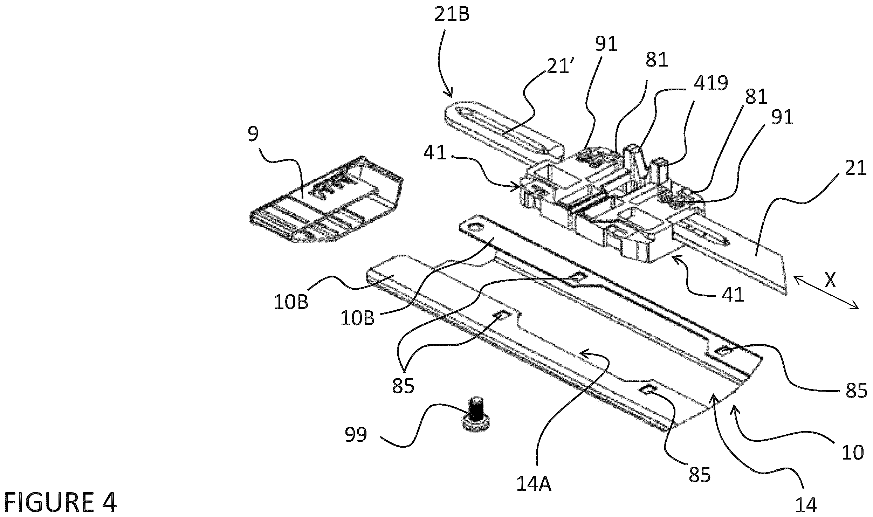

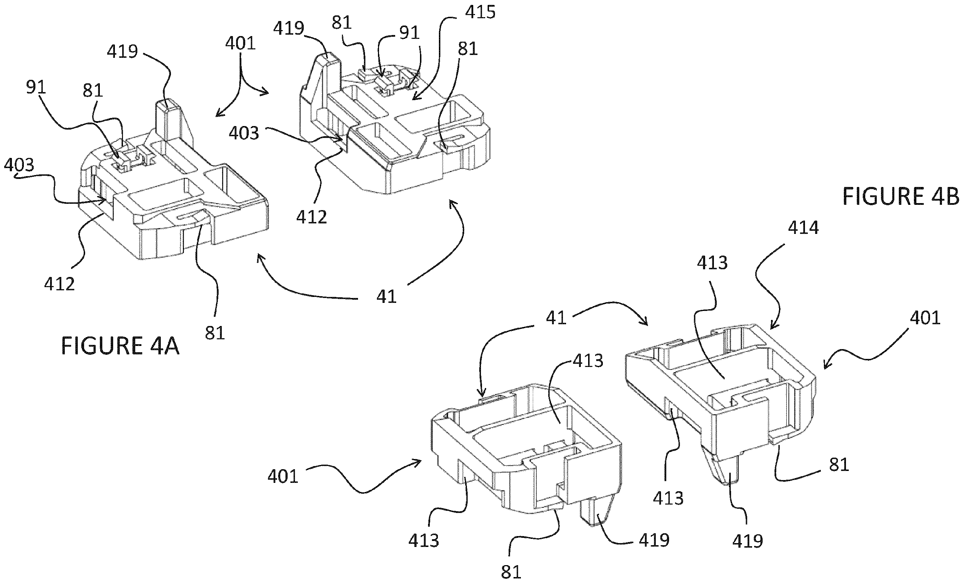

Preferably, the guide elements 41 provided for supporting and guide the first rod 21 have the same structure of the guide elements 42 provided for supporting and guide the second rod 22. Hereinbelow, reference is made to the guide elements 41 of the first rod 21, but the technical solutions disclosed are valid also for the guide elements 42 provided for the second rod 22. Figures 4A and 4B show an embodiment of a pair of guide element 41 usable for supporting the first rod 21. Each guide element 41 comprises a body 401 defining a longitudinal cavity 403 through which the first rod 21 can be inserted. On this regard, the body 401 defines a plurality of first surfaces 412 that make the body 401 and the first rod 21 mutually slidable after their placement in the seat 15 of the profile 10. In other words, the first surfaces 412 define a sort of sliding plane for the two components (guide element 41 and first rod 21). The body 401 also comprises a plurality of second surfaces 413 that guide laterally the first rod 21 with respect to the body 401, and vice versa, defining a mutual sliding direction X (see Figure 4) between the two components at issue (guide element 41 and first flat rod 21).

The body 401 defines an internal side 414 and an external side 415 that are mutually opposed. The term *"internal"* wants to indicate the surfaces of the body 401 address to face the internal surfaces of the containment profile 10, i.e., the profile surfaces defining the seat 15. The term *"external"* intends to indicate the opposite side.

Preferably, the guide element 41 comprises connecting means for connecting the guide element 41 to the profile 10. In the embodiment shown in Figures 4A and 4B, the connecting means are provided on the external side 415 of the body 401 and comprise a couple of first snap-fit connectors 81 each of which configured to engage in a corresponding slot 85 defining through one of the flat portions 10B of the profile 10 (see for example figure 4). Preferably, the two snap fit connectors 81 are placed on opposite parts of the body 401 with respect to the longitudinal cavity 403.

Preferably, the guide element 41 also comprises fixing means for connecting the lock assembly 1, after its assembling, to the door 2 on which the assembly 1 is installed. In the embodiment shown in the figures, the fixing means comprise second snap-fit connectors 91 configured to engage in a corresponding slot 95 defined through the door 2 on which the pre-mounted lock assembly 1 will be installed.

In the embodiment shown in the figures, two second snap-fit connectors 91 are provided on the external side 415 of the body 401. Such a connectors 91 are of cantilever type. The two connectors 91 are specular with respect to a plane orthogonal to the slide direction 101. The two connectors 91 engage on opposite edge of the same slot 95 defined through the door 2.

The first snap-fit connectors 81 and the second snap-fit connectors 91 could have a configuration different from that shown in the figures.

As shown in the figures, the body 401 of the guide element preferably comprises also an alignment element 419 which protrudes from the external side 415. When the lock assembly 1 is installed on the door 2, then the alignment element 419 protrudes externally through a further slot 27 of the door. As shown in Figure 8A, preferably, such a further slot 27 is define between two slots 95 provided for the second snap fit connectors 91 (see Figure 8A).

The alignment element 419 is provided to contact an alignment surface 300A of a fixed locking element 300 arranged on the supporting structure 500 of the cabinet. As better below indicated, the alignment elements 419 and the alignment surfaces 300A mutually cooperate to keep the door 2 vertically aligned with respect to the supporting structure 500.

Figures 6A and 6B show an embodiment of a pair of guide element 43 usable for supporting the central rod 23, as shown in Figure 6. From these figures, the structure of the guide element 43 appears clearly different from that of the guide elements 41, 42 provided for supporting the other flat rods 21,22 of the mechanism 20. However, the structure could be different from that shown in the figures and it could be more similar to that provided for the other guide elements 41, 42 of the mechanism.

The guide element 43 of the central rod 23 comprises a body 510 having an external side 516 and an internal side 514, wherein the terms *"external"* and *"internal"* have the same meaning above indicated. The body 510 develops along a main direction Y and comprises a base 511 and two opposite flanks 512. The body 510 has a transversal C-shaped section considered on a section plane orthogonal to the main direction Y. The internal surface 511A of the base 511 is substantially flat so as to the define a sliding plane for the relative movement of the central rod 23 with respect to the body 510 or vice versa. The body 510 comprises a plurality rest surfaces 513 that overall define a longitudinal direction for the mutual sliding of the two components (body 510 and central rod 23).

As indicated in the figures, also the guide element 43 of the central rod 23 is provided with snap-fit joints for its connection with the profile 10. As provided for the external guide elements 41, the joints of the central guide elements 43 are two snap-fit connectors 81A that protrude from the external side 516 of the body 510. The two connectors 81A are defined on opposite side of the body 510 each close to a corresponding flank 512. Each of the connector 81A is configured to engage a slot 85A defined through flat edge of the profile 10.

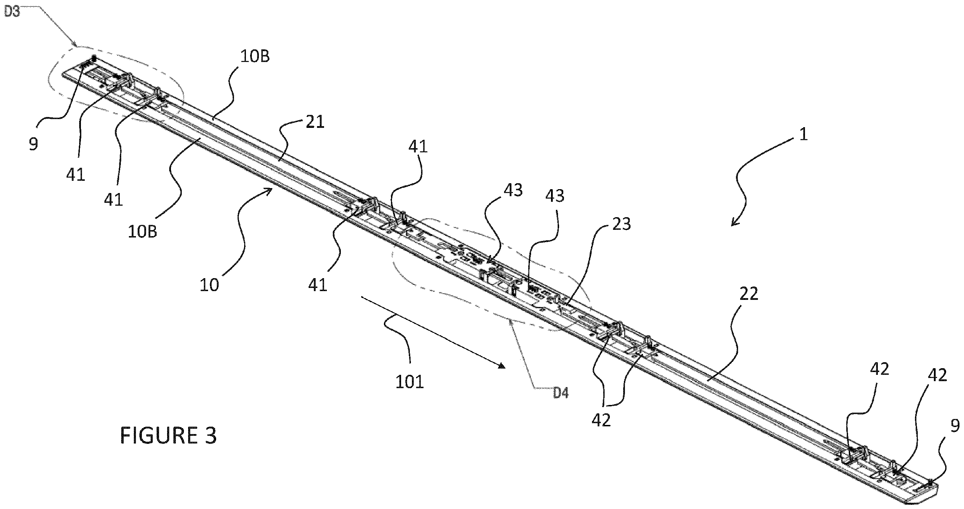

With reference in particular to Figures 2 and 3, hereinbelow the step for assembling the lock assembly 1 are described.

Firstly, each rod 21, 22, 23 is coupled with the corresponding pair of guide elements 41, 42, 43. In the case of the first rod 21, for example, it is inserted through the cavity 403 of each of the corresponding guide elements 41. A first and a second pair of guide elements 41 are arranged respectively close to an external end 21B (distal from central rod 23) and to the internal end 21A (proximal to the central rod 23) of the first rod 21. More precisely, for each of said pairs, the guide elements 41 are arranged so as to be specular with respect to a reference plane orthogonal to the direction along which the first rod 21 mainly develops. As shown in Figure 2, the same arrangement is provided for the two pairs of guide elements 42 of the other external rod 22 and for the guide elements 43 of the central rod 23.

Secondly, the group of components comprising the first rod 21 and the guide elements 41 is placed into the seat 15 of the containment profile 10 by means of the longitudinal opening above defined. More precisely, each pair of guide elements 41 is inserted in the seat 15 at one of the opening enlargements 14A, while the first rod 21 can be inserted by exploiting the other region (not enlarged) of the longitudinal opening 14. It is worth to notice that the guide elements 41 are inserted in the seat 15 so that the snap fit connectors 81, 91 face outwards.

Analogously, the group of components comprising the second rod 22 and the relative guide elements 42 is inserted in the seat 15 by means of the opening 14 and the two relative enlargements 14A.

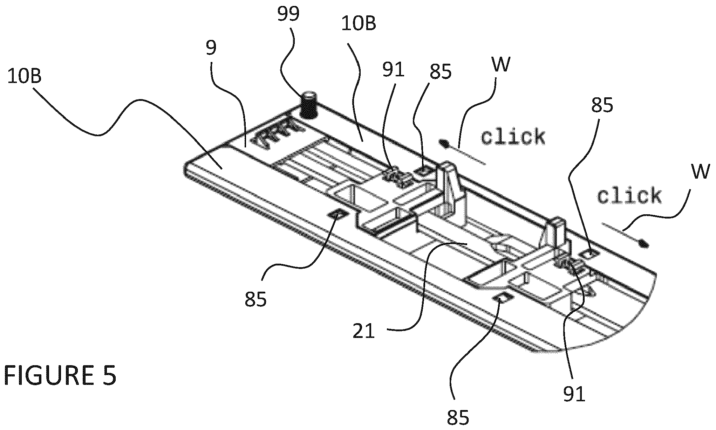

For each of the two group of components 21-41, 22-42 above cited, following their placement in the seat 15, the guide elements 41-42 (of each pair of guide elements 41, 42) are moved mutually away until when their first snap-fit connectors 81 engage a corresponding slot 85 define through the flat portion 10B of the profile 10, i.e., until each guide element 41, 42 reach an engagement condition with the profile 10. On this regard, Figure 5 shows a pair of guide elements 41 of the first rod 21 in an engagement condition. In such a figure, the two arrows W indicated the movement direction of the two engage elements 41 from an initial position occupied after the placement in the seat 15. The indication *"click"* in Figure 5 wants to emphasize the snap-fit action of the connectors 81. The guide elements 42 of the second rod 22 work in the same way.

After or at the same time of the placement of the two groups of components 41-21, 42-22 above cited in the seat 15, the group of components 23-43 comprising the central rod 23 and the relative pair of guide elements 43 is inserted in the seat 15 by exploiting the central enlargement 14A of the opening 14. In particular, the central rod 23 is inserted by engaging each of its bent ends 23A, 23B in a slot 21', 22' of a corresponding internal end 21A, 22A of the external rods 21, 22.

Also in this case, after their placement in the seat 15, the guide elements 43 of the third rod 23 are moved away until when they reach an engagement condition with the profile 10, namely until each of the snap fit connectors 81A provided on the body 510 engages a corresponding slot 85B defined through the profile 10.

Figure 3 shows the lock-assembly 1 in its final configuration, namely after the mechanism has been inserted in the seat 15 of the containment profile 10 and after the guide elements 41, 42, 43 of the rods 21, 22, 23 have been rigidly connected to the same profile 10 by means of the snap-fit connectors 81, 81B.

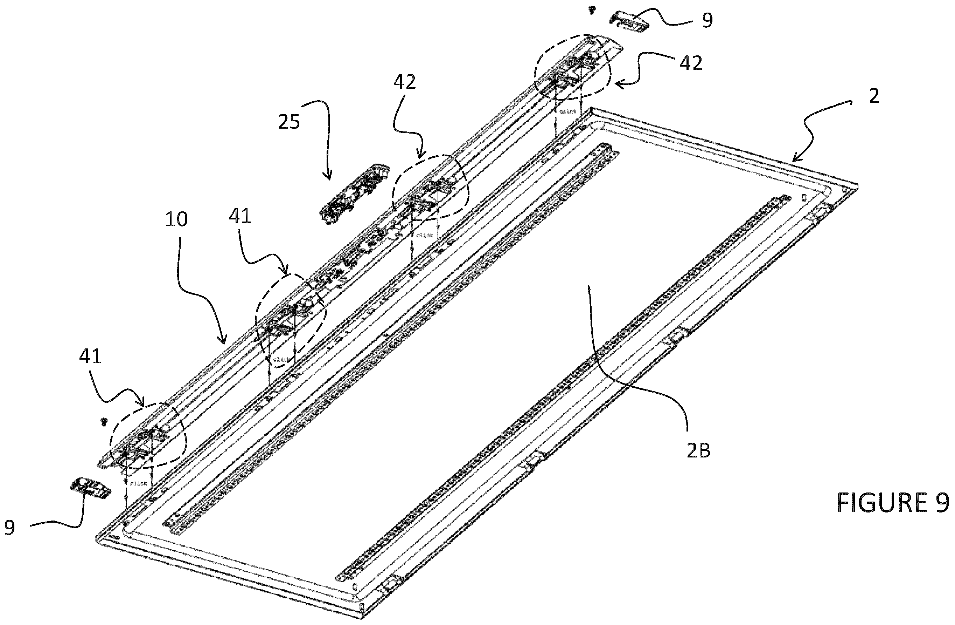

As shown in Figures 2 or 3, preferably, a stopper element 9 is provided for each end of the containment profile 10. Such a stopper element 9 is longitudinally inserted in the seat 15 and fixed to one of the flat portions 10B of the profile 10 by means of fixing means, such as for example a screw 99. The stopper element 9 avoids that dust, particles or other dirt may enter the seat so as to keep the mechanism effective and reliable. Preferably, the stopper elements 9 are inserted in the seat 15 after the lock assembly 1 has been installed on the door 2. However, the stopper elements 9 could be positioned also before the installation of the lock assembly 1. As above mentioned, the present invention also refers to a door 2 of a low-voltage cabinet comprising a lock assembly 1. On this regard, Figures 8 and 9 show a door 2 on which a lock assembly 1 according to the invention can be assembled. More in detail, Figures 8 and Figure 9 show respectively the external side and the internal side of the door 1. The term *"external"* and *"internal"* refer to a condition of door installed on the supporting structure 500 of an enclosure. In such a condition, the internal side is the one facing the internal space of the cabinet in which the electrical devices/equipment are housed.

As shown in Figures 8 and 9, the lock assembly 1 can be connected to the door 2 by means of the second snap-fit connectors 91 protruding from the external side 415 of the body 401 of the guide elements 41, 42 of the external rods 21, 22 of the mechanism 20. In particular, the preassembled lock assembly 1 can be connected by approaching it to the external side 2A of the door 2 so as to align second snap-fit connectors 91 to the corresponding slot 95. Then, by a simple push, each of the second snap-fit connectors 91 engages in the corresponding slot 95. Therefore, the connection of the lock assembly 1 to the door 2 is very easy and can be actuated also outside the door production line. Further, the lock assembly 1 can be transported without impacting on the overall encumbrance of the door.

Advantageously, the use of snap-fit means ensures a stably connection of the lock assembly 1 to the door 2. However, depending on the configuration of the second snap-fit connectors 91, such a connection could be fixed or advantageously removable.

On this regard, in the embodiment shown in the figure, for example, the snap-fit connectors 91 are configured so as to be disengaged from the corresponding slot 95 by means of a mechanical action on the snap fit connectors 91 from the internal side 2B of the door 2. Indeed, from Figure 9, it is possible to perceive by intuition that after the installation of the lock assembly 1, the ends of the second snap fit connectors 91 are accessible from the internal side 2B of the door 2. Therefore, such an end could be disengaged from the slot 95 by a mechanical push actuated by a simple tool, such as for example a screwdriver.

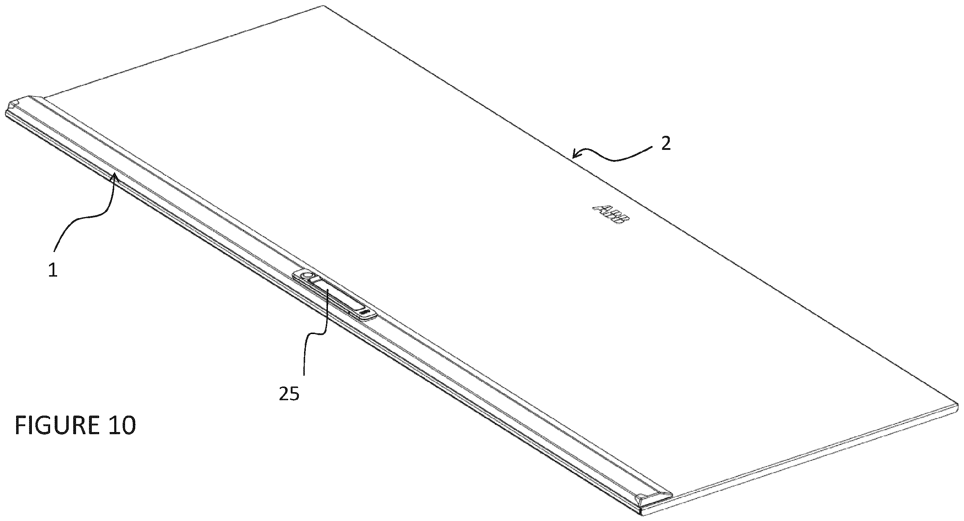

Figure 10 shows the pre-mounted lock assembly 1 fixed on the external side 2A of the door 2. On this regard, the hand activation lever 25 can be connected to the mechanism before the fixing of the lock assembly1 to the door 2. However, the lever 25 is preferably installed later so as limit the volume of the packaging containing the lock assembly 1. Further, installing the action lever 25 after the fixing of the lock assembly 1 gives the operator the opportunity to choose freely the side of the door on which proceeding with such a fixing.

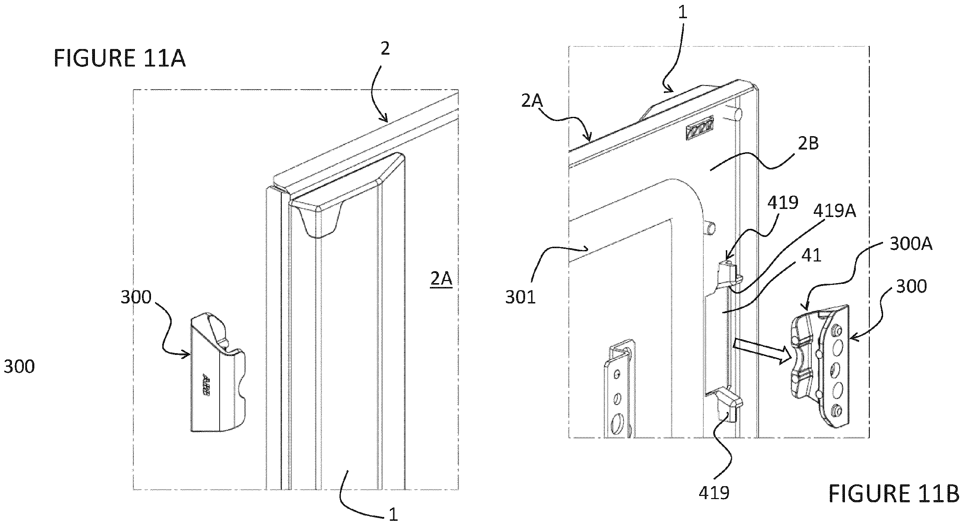

Figure 11 and 11B show, from opposite points of view, a corner of the door 2 in Figure 10. In particular, in these figures, a fixed locking element 300 connected to the supporting structure 500 of the door 2 is shown. Figures 12A and 12B allow to understand how the external rods 21, 22 of the mechanism 20 interact with fixed locking element 300 to lock the door 2. On this regard, in Figures 12A and 12B, only the external rod 21 is shown while the other components of the mechanism 20 and of the lock assembly 1 are not visualized for clarity.

The door 2 is approached to the supporting structure 500 with the mechanism 20 in its first configuration, namely a configuration for which the external rod 21 (first engagement element) does not interact with the fixed locking element 300 (second engagement element). With reference to Figure 12A, in this configuration the lateral recess 200 is aligned with the slot 27 predefined through the door 2.

Following the closure movement, the fixed locking element 300 enters the slot 27 as can be perceived by intuition always from Figure 12A. The fixed locking element 300 is C-shaped with a first surface 311 fixed to the supporting structure 500 and a second surface 312 opposite to the first surface 312. In order to lock the door 2, the external rods 21 is moved, by means of the activation lever 25, along the sliding direction X between the surfaces 311, 312 of the fixed locking element 300. This leads to the locking condition shown in Figure 12B for which the lateral recess 200 of the external rods 21 is not any more aligned with the slot 27 and with the fixed element locking element 300. Therefore, the latter avoid any opening movement of the door 2 in the direction indicated by the arrow Z.

With reference to figure 11B, in any condition, the alignment element 419 of the guide element 41 protrudes from the slot 27 (see figure 8) pre-defined through the door 2. When the door 2 is closed, for each of the alignment element 419, a surface 419A thereof contacts a corresponding surface 300A of the fixed locking element 300 so as to keep the door 2 in a stable position. In

Figure 11B, the arrow indicates the approaching direction of the door 2 towards the supporting structure 500 of the cabinet, that is the direction that leads to the contact between the surfaces 419A and 300A just above indicated.

Several variations can be made to the low and medium voltage electrical enclosure thus conceived all falling within the scope of the attached claims. In practice, the materials used and the contingent dimensions and shapes can be any, according to requirements and to the state of the art.

## Claims

1. Pre-mounted lock assembly (1) for a door (2) of a low and medium voltage electrical cabinet, wherein said lock assembly (1) comprises a:
- a containment profile (10) that develops along a main direction (101) defining a seat (15);
- a mechanism (20) housed in said seat (15), wherein said mechanism (20) comprises at least a rod (21, 22,23) and at least one guide element (41, 42, 43) for said rod (21, 22, 23), wherein said at least one guide element (41, 42, 43) is rigidly connected to said profile (10), and
- fixing means (31) for fixing said lock assembly (1) to said door (2) following the connection of said at least one guide element (41, 42, 43) to said profile (10), wherein said fixing means (31) are installed on said profile (10) and/or on said at least one guide element (41, 42, 43).

2. The pre-mounted lock assembly (1) according to Claim 1, wherein said at least one guide element (41, 42, 43) is connected to said profile (10) by means of first snap-fit means.

3. The pre-mounted lock assembly (1) according to Claim 1 or 2, wherein said fixing means comprise second snap-fit means.

4. The pre-mounted lock assembly (1) according to any-one of the claims 1-3, wherein said containment profile (10) comprises a curved portion (10A) and two flat portion (10B) that develop on a same plane from opposite regions of said curved portion (10A), said flat portions (10B) being separated so that an opening (14) is defined therebetween for the insertion of said mechanism (20) in said seat (15).

5. The pre-mounted lock assembly (1) according to claim 4, wherein said opening (14) comprises at least one enlargement (14A) the insertion of one or more guide elements (41, 42, 43) of said at least one rod (21, 22, 23).

6. The pre-mounted lock assembly (1) according to anyone of the claims 1-5, wherein said mechanism (20) comprises a first rod (21), a second rod (22) and a third rod (23) that connects the first rod (21) to the second rod (22), wherein the first rod (21) and the second rod (22) comprise a through slot (21', 22') defined close to the end (21B, 22B) closest to said third rod (23), said through slot (21", 22") being configured so as to be engaged by a bent end (23A, 23B) of said third rod (23).

7. The pre-mounted assembly (1) according to claim 1, wherein said mechanism (20) comprises a plurality of guide elements (41, 42, 43) for each of said rods (21, 22, 23).

8. The pre-mounted assembly (1) according to anyone of the claims 1-7, wherein said at least one of said guide element (41, 42) comprises a body (401) defining a longitudinal cavity (402) through which said rod (21, 22) can be inserted, said body (401) comprising first surfaces (412) that make it and said rod (21,22) mutually slidable after their placement in said seat (15) of said profile 10, said body (401) comprising second surfaces (413) that guide laterally said rod (21) with respect to said body (401), and vice versa.

9. The pre-mounted assembly (1) according to claim 7 or 8, wherein said body (401) comprises an internal side (414) and an external side (415) mutually opposed, wherein connecting means for connecting said guide element (41, 42) to said profile (10) are arranged on said external side (415) of said body (401).

10. The pre-mounted assembly (1) according to claim 9, wherein said connecting means comprise a couple of first snap-fit connectors (81) each of which configured to engage with a corresponding slot (85) defining through said profile (10).

11. The pre-mounted assembly (1) according to anyone of the claims 8-10, wherein said fixing means are arranged on the external side of said body (401) of said mounting element (41, 42), wherein said fixing means comprise second snap-fit connectors (91) configured to engage in a corresponding slot (95) defined through a door (2) on which the pre-mounted lock assembly (1) will be installed.

12. The pre-mounted assembly (1) according to anyone of the claims 8-11, wherein said body (401) also comprises an alignment element (419) protruding from its external side (415) for contacting an alignment surface (300A) of a fixed locking element (300) arranged on the supporting structure (500) of said enclosure.

13. Door (2) for a low voltage enclosure **characterized in that** it comprises a pre-mounted lock assembly (1) according to one or more of the preceding claims.

14. Low voltage enclosure **characterized in that** it comprises a door (2) according to claim 13.
